# EUROPÄISCHE PATENTSCHRIFT

(11) **EP 1 656 038 B1**
(45) Veröffentlichungstag und Bekanntmachung des Hinweises auf die Patenterteilung: **15.12.2010**
(21) Anmeldenummer: 04763830.9
(22) Anmeldetag: 05.08.2004
(51) Int. Cl.: A23L 1/22, A23F 3/40

(54) **VERFAHREN ZUR STABILEN AROMATISIERUNG VON GETRÄNKEN**
METHOD FOR STABLY FLAVORING DRINKS
PROCEDE D'AROMATISATION STABLE DE BOISSONS

(30) Priorität: 07.08.2003 DE 10336146
(43) Veröffentlichungstag der Anmeldung: 17.05.2006
(73) Patentinhaber: Evonik Degussa GmbH, 45128 Essen (DE)
(72) Erfinder: WIESMÜLLER, Johann, 84518 Garching (DE)
(74) Vertreter: Thiele, Georg Friedrich
(86) Internationale Anmeldenummer: PCT/EP2004/008789
(87) Internationale Veröffentlichungsnummer: WO 2005/016030

(56) Entgegenhaltungen:
- WO-A-01/05926
- WO-A-95/11595
- DD-A- 268 150
- US-B1- 6 235 274
- DATABASE WPI Section Ch, Week 199302 Derwent Publications Ltd., London, GB; Class A92, AN 1993-013392 XP002307676 & JP 04 341165 A (KURARAY CHEM CO LTD) 27. November 1992 (1992-11-27)

## Beschreibung

Gegenstand der vorliegenden Erfindung ist eine Verwendung von festen, Lösemittel-inerten und mit den Aromastoffen beladenen, teilchenförmigen Trägermaterialien mit großer spezifischer Oberfläche zur stabilen Aromatisierung von Getränken.

Die Verwendung von Trägermaterialien mit großer spezifischer Oberfläche zur Aromatisierung von Lebensmitteln ist seit langem bekannt.

Aromastoffe sind im allgemeinen komplex aufgebaut und bestehen aus zahlreichen organoleptisch aktiven Verbindungen, deren spezifische Kombination erst die charakteristische Aromanote bildet. Aromastoffe sind aber im unverdünnten Zustand typischerweise instabil und so wurde versucht, sie mit Hilfe von Trägermaterialien zu stabilisieren und somit leichter handhabbar zu machen. Dabei müssen die Trägermaterialien inert oder zumindest reaktionsneutral sein und sie dürfen vor allen Dingen mit den Aromastoffen nicht wechselwirken oder die typische Aromanote verfälschen.

Vor allem im Lebensmittelbereich werden als Trägermaterialien wasserlösliche Feststoffe oder Flüssigkeiten verwendet, wobei im Falle von Flüssigkeiten diese meist in einer festen wasserlöslichen Matrix verkapselt werden. Werden Flüssigkeiten mit an Trägermaterialien gebundenen Aromastoffen versetzt, sollen die verwendeten Trägermaterialien leicht mit den Flüssigkeiten mischbar sein, weshalb sich traditionell als geeignete Trägermaterialien Ethanol, Propylenglykol, Glycerin, vegetabile Öle, Benzylalkohol usw. durchgesetzt haben.

Gemäß WO 02/49450 wird zur Aromatisierung von Lebensmittelzubereitungen eine teilchenförmige Aromazusammensetzung eingesetzt, die aus einer festen, wasserlöslichen Matrix besteht, in der die Aromastoffe physikalisch eingeschlossen vorliegen. Bei den Aromastoffen handelt es sich um leicht flüchtige, jedoch von den natürlichen ätherischen Ölen abweichende Aromen. Als Trägermaterial wird eine ebenfalls leicht flüchtige organische Verbindung gewählt, die unter Atmosphärendruck und bei 25 °C im flüssigen Zustand stabil ist und einen Dampfdruck von mindestens 0,01 mm/hg bei 25°C sowie einen Siedepunkt zwischen 25 und 250 °C aufweist. Außerdem muss die Dichte < 1,0 g/cc bei 25 °C betragen und die Wasserlöslichkeit darf nicht höher als 10 % bei 25°C sein. Bevorzugt werden hierfür synthetische Trägermaterialien der Reihe Monoterpene, Kohlenwasserstoffe, Ester und Alkylfurane, wie bspw. d-Limonen, 2-Ethylfuran, 2-Methylfuran oder Ethylacetat.

Aus der internationalen Anmeldung WO 00/16643 sind eingekapselte Riechstoffe und/oder Aromen mit speziellem Freisetzungsverhalten bekannt. Die eingekapselten Aromen weisen eine Umhüllung aus modifizierter Zellulose auf, wobei die Zellulose bei Temperaturerhöhung reversibel eine Gelbildung eingeht. Diese Aroma- oder Riechstoffpartikel werden dabei vorzugsweise durch Wirbelschichtsprühgranulation einer wässrigen Emulsion bestehend aus Aroma und hydrophilen Trägem hergestellt. Verwendung finden diese eingekapselten Aromen bei der Herstellung von Lebensmitteln oder Bedarfsgegenständen, insbesondere von Teeaufgussbeuteln, Instantsoßenpulvern, aber auch zur Herstellung von pasteurisierten Getränken. Mit dieser Variante der Aromatisierung von u.a. Getränken wird die sogenannte reversible Thermogelierung ("reversible thermal gelation) von Cellulose-Derivaten ausgenutzt, die als Schutzmatrix für temperaturempfindliche Substanzen verwendet werden. Bei der Herstellung aromatisierter und wasserhaltiger Lösemittel, die einen Erhitzungsprozess durchlaufen, ist es damit möglich, die Aromafreisetzung effektiv zu regeln, da die Freisetzungsrate in der Abkühlphase gezielt zeit- und temperaturabhängig steuerbar ist, bis hin zur vollständigen Kaltwasserlöslichkeit. Die hierbei verwendeten Partikel haben einen Durchmesser zwischen 10 und 5 000 µm

Im US-Patent 5,482,560 ist ein Aromaträger beschrieben, der im wesentlichen aus β-Dextrin mit definiertem Polymerisationsgrad besteht, wobei das Dextrin aus Stärke gewonnen wurde. Im Vordergrund des Einsatzes dieses Aromaträgerstoffes steht die Aromatisierung von Getränken mit nicht-vollständig wasserlöslichen Aromaölen, von denen zum Zweck der Einkapselung in einem Trockenprodukt mit Hilfe der Dextrine Emulsionen hergestellt werden können.

Aus der WO 90/08478 ist ein Nahrungsmittelprodukt bekannt, das poröse Polymerkügelchen enthält, welche mit aromatisierenden Komponenten imprägniert sind. Dabei können die kugelförmigen Trägermaterialien, die im wesentlichen mit leicht-flüchtigen Substanzen beladen sind, mit einem wasserlöslichen Überzug beschichtet sein, der zudem unter Einfluss erhöhter Temperaturen schmelzen kann. Als geeignete aromatisierende Agenzien sind ätherische Öle und synthetische Aromastoffe, wie z.B. Citrusöle, Pefferminzöle und Fruchtessenzen genannt. Die Trägermaterialien können Fertiggetränken, aber auch Konzentraten, die für Flüssiggetränke gedacht sind, zugesetzt werden, wobei die Aromaabgabe an das Getränk während der Lager- oder Transportzeit erfolgt und die Freisetzung durch die Auswahl geeigneter wasserlöslicher Beschichtungen hinausgezögert werden kann. Die porösen Polymerkügelchen selbst bestehen aus Copolymeren von Divinylbenzol und Styrol oder anderen, Lebensmittel-geeigneten Monomeren, wie Estragol, Limonen oder Eugenol.

Die europäische Patentanmeldung 230 504 beschreibt Instantgetränke in Pulver-, Granulat- oder Pastenform, die neben Kakaopulver auch Geschmacks- und/oder Aromastoffe und einen Träger enthalten können, bei dem es sich um ein in Flüssigkeit dispergierbares Protein handelt.

Aus dem Stand der Technik sind somit im Zusammenhang mit der Aromatisierung von Lebensmitteln und insbesondere Getränken ausschließlich organische Verbindungen bekannt, die zum Teil selbst nicht wärme- bzw. hitzestabil sind oder aber eine erhöhte Kaltwasserlöslichkeit aufweisen müssen. Zudem sind die porösen Trägerpartikel zur Aromatisierung über einen längeren Zeitraum mit Beschichtungsmaterialien gecoatet.

Nachteilig sind bei diesen bekannten Trägermaterialien damit hauptsächlich deren Thermolabilität und deren unzureichende Aromaabgabe über einen längeren Zeitraum im nicht-beschichteten Zustand, wobei sich die Trägermaterialien zum Teil in der sie umgebenden flüssigen Matrix auflösen.

Aus diesen bekannten Nachteilen des Standes der Technik hat sich somit für die vorliegende Erfindung die Aufgabe gestellt, ein Verfahren zur stabilen Aromatisierung von Getränken mittels fester, Lösemittel-inerter und mit den Aromastoffen beladener, teilchenförmiger Trägermaterialien mit großer spezifischer Oberfläche bereitzustellen, mit dessen Hilfe die freizusetzenden Aromen insbesondere unter erhöhten Temperaturen über einen längeren Zeitraum stabil gehalten werden und mit dem auch Heißgetränke über längere Zeiträume in gleichbleibender Qualität homogen aromatisiert werden.

Gelöst wurde diese Aufgabe durch die Verwendung wie in Anspruch 1 definiert, bei der als Trägermaterialien anorganische Silicium-, Aluminium und/oder Kohlenstoff-haltige Verbindungen der Reihe Silikate, Aluminiumoxide und Aktivkohlen eingesetzt werden, die gegebenenfalls Wasseranteile aufweisen.

Überaschenderweise wurde mit dieser Verwendung nicht nur die gewünschte stabile Aromatisierung über längere Zeiträume, z.B. ≥ 1 h, insbesondere ≥ 1 Tag, erreicht, sondern es wurde auch festgestellt, dass die auf dem Trägermaterial gebundenen - Aromastoffe sehr reine und intensive Aromanoten entfalten. Zudem war nicht zu erwarten, dass die sonst bei der Aromatisierung von wasserhaltigen Getränken mit ätherischen Ölen auf der Flüssigkeitsoberfläche auftretenden "Ölaugen" vollkommen vermieden werden und dass selbst Heißgetränke nun mit äußert leicht-flüchtigen Aromastoffen auf einfache Weise stabil aromatisiert werden können.

Für die vorliegende Verwendung haben sich als Trägermaterialien insbesondere Kieselgele, Kieselgur, aktivierte und/oder calzinierte Tonerden, γ-Al₂O₃ und Aluminiumoxid-Xerogele als geeignet gezeigt.

Bei Kieselgur z.B. handelt es sich um eine in der Natur vorkommende amorphe Kieselsäure fossilen Ursprungs, die auch als Diatomeenerde, Bazillarienerde oder Diatomit bezeichnet wird. Das ebenfalls als Trägermaterial geeignete Aluminiumoxid wird allgemein in drei Klassen untergliedert, nämlich in die α-Modifikation, in die sogenannte γ-Formen und in Sonderformen. Als γ-Formen werden alle zwischen 400 und 1000 °C auftretenden thermodynamisch instabilen Al₂O₃-Formen bezeichnet, die auch unter der Bezeichnung "nicht-stöchiometrische Aluminiumhydroxide" in Bezug auf die an der Oberfläche vorhandenen OH⁻-Gruppen bekannt sind. Aktivkohlen sind industriell hergestellte und problemlos zu handhabende Kohlenstoff-haltige Produkte, die eine poröse Struktur und eine große innere Oberfläche besitzen. Aus diesem Grund können sie ein sehr breites Spektrum von Substanzen adsorbieren, d.h. Moleküle an ihrer inneren Oberfläche festhalten. Das Porenvolumen von Aktivkohlen ist im allgemeinen größer als 0,2 mL/g und die innere Oberfläche ist > 400 m²/g. Ihre Porenweite erstreckt sich von 0,3 bis zu einigen 1 000 nm.

Um ein möglichst breites Spektrum der zu adsorbierenden Aromastoffe abzudecken, sieht die Erfindung vor, Trägermaterialien zu verwenden, die eine spezifische Oberfläche zwischen 0,1 und 1000 m²/g aufweisen, wobei Oberflächen bevorzugt werden, die zwischen 50 und 500 m²/g betragen. Bevorzugt weisen die Trägermaterialien eine große spezifische Oberfläche auf und insbesondere eine spezifische Oberfläche von mindestens 1, mehr bevorzugt mindestens 10 und noch mehr bevorzugt mindestens 100 m²/g auf.

Als ebenfalls bevorzugt sind Trägermaterialien anzusehen, die eine Porengröße zwischen 0,3 und 5 000 nm aufweisen, bevorzugt zwischen 1 und 1 000 nm und noch mehr bevorzugt zwischen 10 und 100 nm

Im Hinblick auf die Teilchengröße sind im Rahmen der erfindungsgemäßen Verwendung Trägermaterialien besonders geeignet, deren Teilchengrößen pro Einzelpartikel ≥ 10 µm sind, insbesondere ≥ 20 µm und noch mehr bevorzugt ≥ 50 µm

Hinsichtlich des Wassergehaltes der Trägermaterialien ist die vorliegende Verwendung keinen Einschränkungen unterworfen, doch sollte der Wassergehalt vorzugsweise 25 Gew.-% und insbesondere 10 Ges.-%, bezogen auf das Trägermaterial, nicht übersteigen.

Wie bereits angedeutet, weist die vorliegende Verwendung insbesondere Vorteile bei der stabilen Aromatisierung von Getränken und hier insbesondere von Heißgetränken auf In diesem Zusammenhang sieht die Erfindung auch eine Verfahrensvariante vor, bei der die Trägermaterialien mit leicht-flüchten Aromastoffen, vorzugsweise natürlichen Ursprungs, beladen verwendet werden.

Insgesamt empfiehlt es sich, für die beanspruchte Verwendung als Aromastoffe ätherische Öle, Citrusöle, Fruchtessenzen und Aromaextrakte einzusetzen, die natürlich auch in beliebigen Mischungen auf die Trägermaterialien aufgebracht werden können.

Seine Vorteile entfaltet die erfindungsgemäße Verwendung besonders gut, wenn die mit den Aromastoffen beladenen Trägermaterialien wässrigen Aufguss- oder Auszugsgetränken und hierbei vorzugsweise Tees zugesetzt werden. Dabei spielt die Temperatur der zu aromatisierenden Getränke im allgemeinen keine Rolle, jedoch gelingt die Aromatisierung in beeindruckend stabiler und homogener Art und Weise insbesondere bei Heißgetränken. Solche Heißgetränke liegen bevorzugt bei einer Temperatur ≥ 40 °C, insbesondere ≥ 60 °C und noch mehr bevorzugt ≥ 80°C vor.

Hinsichtlich der Beladung der Trägermaterialien mit den später in den Getränken freizusetzenden Aromastoffen sieht die vorliegende Erfindung zwei Verfahrensvarianten vor, bei denen zum einen die Trägermaterialien zur Beladung mit den Aromastoffen in Aromastoff-haltige Flüssigkeiten eingetragen worden sind, was auch in Verbindung mit Rührvorgängen geschehen sein kann, oder aber bei denen die Trägermaterialien mit Aromastoff-haltigen Flüssigkeiten besprüht werden.

Für die beiden genannten Verfahrensvarianten haben sich als Vertreter von Aromastoff-haltigen Flüssigkeiten Prozesswässer besonders geeignet gezeigt, die aus der Aromenindustrie und hier vorzugsweise aus der Aromenextraktion, der Aromenaufbereitung und/oder Aromenverarbeitung stammen. Gleichermaßen gut geeignet als Aromastoff-haltige Flüssigkeiten sind aber natürlich auch Aromenkonzentrate.

Zwar entfalten die im Rahmen der vorliegenden Verwendung beanspruchten Trägermaterialien ihre herausragenden Eigenschaften der konstanten und über längere Zeiträume stabilen Aromastoffabgabe ohne jegliche weitere Behandlung, jedoch ist es im Falle spezieller Anwendungen auch möglich, diese Trägermaterialien nach der Beladung mit den Aromastoffen zu beschichten, was insbesondere gemeinsam mit funktionellen Materialien möglich ist. Diese funktionellen Beschichtungsmaterialien können bspw. Lebensmittel, Farbstoffe oder Süßungsmittel enthalten und sich vor der Freisetzung der Aromastoffe in der Getränkematrix auflösen.

Der beanspruchten Verwendung zur stabilen Aromatisierung von Getränken ist prinzipiell keine Grenze gesetzt, weshalb die mit den Aromastoffen beladenen Trägermaterialien direkt den zu aromatisierenden Getränken zugesetzt werden können oder auch Getränkegrundstoffen beigemengt werden können, wie sie bspw. Instantpulver darstellen. Möglich ist es natürlich auch, die Trägermaterialien im Rahmen des erfindungsgemäßen Verfahrens funktionellen Einheiten, wie sie bspw. Teebeutel oder Brausepulver oder Brausetabletten darstellen, zuzusetzen. Insgesamt stellt das erfindungsgemäße Verfahren eine einfache Möglichkeit dar, um Getränke gleichmäßig und über einen längeren Zeitraum stabil und homogen mit reinen Aromanoten zu versetzen.

Gegenstand der vorliegenden Erfindung ist eine von festen, Lösemittel-inerten und mit den Aromastoffen beladenen, teilchenförmigen Trägermaterialien mit großer spezifischer Oberfläche, zur stabilen Aromatisierung von Getränken bei dem als Trägermaterialien anorganische Silicium-, Aluminium- und/oder Kohlenstoff-haltige Verbindungen der Reihe Silikate, Aluminiumoxide und Aktivkohlen eingesetzt werden, die gegebenenfalls Wasseranteile aufweisen. Als besondere geeignete Trägermaterialien kommen Kieselgele, Kieselgur, aktivierte und/oder calzinierte Tonerde, γ-Al₂O₃- und Aliumoxid-Xerogele in Frage, die eine spezifische Oberfläche zwischen 0,1 und 1000 m²/g und eine Teilchengröße ≥ 10 µm besitzen sollten. Als geeignete Porengrößen der Trägermaterialien werden solche angesehen, die zwischen 0,3 und 5 000 nm liegen. Geeignete Aromastoffe sind ätherische Öle, Citrusöle, Fruchtessenzen und Aromaextrakte, zu deren Beladung die Trägermaterialien in entsprechend Aromastoff-haltige Flüssigkeiten eingetragen oder mit diesen besprüht werden. Mit dieser Verwendung lassen sich insbesondere Heißgetränke stabil über längere Zeiträume aromatisieren.

Die nachfolgenden Beispiele veranschaulichen die Vorteile der beanspruchten Verwendung.

### Beispiele

### Beispiel 1 (Erfindung)

100 g Orangenöl (süß) wurden mit 30 g handelsüblichem Kieselgel 90 Minuten intensiv gerührt. Nach dem Absetzen des Kieselgels wurde das überständige Orangenöl dekantiert und das beladene Kieselgel solange zentrifugiert, bis kein Zentrifugat mehr auftrat.
Anschließend wurden 100 g Schwarztee-Pulver mit 5 g des beladenen Kieselgels vermischt.
2 g dieser Mischung wurden in einer Tasse mit 200 ml kochendem Wasser überbrüht, kurz aufgerührt und 3 Minuten ziehengelassen. Nach dieser Zeit wurde das fertige Teegetränk dekantiert.
Der so aromatisierte Schwarztee besitzt eine besonders intensive, typische Orangennote, er weist zudem keine "Ölaugen" auf und seine Aromanote ist auch über mehrere Stunden sensorisch erfassbar.

### Beispiel 2 (Erfindung)

1,5 ml eines 5-fach mit Ethanol verdünnten, natürlichen Apfelaromaextrakts wurden auf 5 g handelsübliches Kieselgel aufgesprüht. Anschließend wurden 50 g Schwarztee-Pulver mit dem beladenen Kieselgel vermischt. 1,5 g dieser Mischung wurden in einer Tasse mit 200 ml kochendem Wasser übergossen, kurz aufgerührt und 2 Minuten ziehengelassen. Anschließend wurde das fertige Teegetränk dekantiert.

Der erhaltene Apfelschwarztee enthält alle typischen und intensiven Noten eines Apfelaromas, das auch während der Abkühlphase und selbst 3 Stunden danach sensorisch erfassbar ist.

### Beispiel 3 (Vergleich)

50 g Schwarztee-Pulver wurden mit 1,5 ml eines 5-fach mit Ethanol verdünnten ethanolischen Apfelaromaextraktes besprüht. 1,5 g dieser Mischung wurden in einer Tasse mit 200 ml kochendem Wasser übergossen, kurz aufgerührt und 2 Minuten ziehengelassen. Anschließend wurde das fertige Teegetränk dekantiert.

Die im Moment des Aufbrühens noch feststellbare Apfelaromanote war im fertigen Teegetränk nicht mehr sensorisch zu erfassen.

## Patentansprüche

1. Verwendung von festen, Lösemittel-inerten und mit Aromastoffen beladenen, teilchenförmigen Trägermaterialien zur stabilen Aromatisierung von Getränken, **dadurch gekennzeichnet, dass** als Trägermaterialien anorganische Silicium-, Aluminium- und/oder Kohlenstoff-haltige Verbindungen der Reihe Silikate, Aluminiumoxide und Aktivkohlen, gegebenenfalls mit Wasseranteilen, eingesetzt werden, welche eine spezifische Oberfläche zwischen 0,1 und 1 000 m²/g und bevorzugt 50 bis 500 m²/g aufweisen.

2. Verwendung nach Anspruch 1, **dadurch gekennzeichnet, dass** als Trägermaterialien Kieselgele, Kieselgur, aktivierte und/oder calzinierte Tonerden, γ-Al₂O₃ oder/und Aluminiumoxid-Xerogele eingesetzt werden.

3. Verwendung nach einem der Ansprüche 1 oder 2, **dadurch gekennzeichnet, dass** Trägermaterialien mit einer Porengröße zwischen 0,3 und 5 000 nm eingesetzt werden.

4. Verwendung nach einem der Ansprüche 1 bis 3, **dadurch gekennzeichnet, dass** Trägermaterialien mit einer Teilchengröße ≥ 10 µm verwendet werden.

5. Verwendung nach einem der Ansprüche 1 bis 4, **dadurch gekennzeichnet, dass** die Trägermaterialien mit leichtflüchtigen Aromastoffen, vorzugsweise natürlichen Ursprungs, beladen verwendet werden.

6. Verwendung nach Anspruch 5, **dadurch gekennzeichnet, dass** es sich bei den Aromastoffen um ätherische Öle, Zitrusöle, Fruchtessenzen und Aromaextrakte handelt.

7. Verwendung nach einem der Ansprüche 1 bis 6, **dadurch gekennzeichnet, dass** die beladenen Trägermaterialien wässrigen Aufguss- oder Auszugsgetränken und vorzugsweise Tees zugesetzt werden.

8. Verwendung nach einem der Ansprüche 1 bis 7, **dadurch gekennzeichnet, dass** die Trägermaterialien zur Beladung mit den Aromastoffen in Aromastoff-haltige Flüssigkeiten eingetragen worden sind.

9. Verwendung nach einem der Ansprüche 1 bis 7, **dadurch gekennzeichnet, dass** die Trägermaterialien zur Beladung mit den Aromastoffen mit Aromastoff-haltigen Flüssigkeiten besprüht werden.

10. Verwendung nach einem der Ansprüche 8 oder 9, **dadurch gekennzeichnet, dass** es sich bei den Aromastoff-haltigen Flüssigkeiten um Prozesswässer aus der Aromenindustrie und vorzugsweise aus der Aromenextraktion, Aromenaufbereitung und/oder Aromenverarbeitung oder um Aromenkonzentrate handelt.

## Claims

1. Use of solid, particulate support materials, which are inert to solvents and are laden with flavours, for stably flavouring drinks, **characterized in that** inorganic silicon-, aluminium- and/or carbon-containing compounds selected from the group consisting of silicates, aluminium oxides and activated carbons, optionally with proportions of water, which have a specific surface area in the range between 0.1 and 1000 m²/g and preferably from 50 to 500 m²/g are used as support materials.

2. Use according to Claim 1, **characterized in that** silica gels, kieselguhr, activated and/or calcined aluminas, γ-Al₂O₃ or/and aluminium oxide xerogels are used as support materials.

3. Use according to either Claim 1 or 2, **characterized in that** support materials having a pore size in the range between 0.3 and 5000 nm are used.

4. Use according to any of Claims 1 to 3, **characterized in that** support materials having a particle size of ≥ 10 µm are used.

5. Use according to any of Claims 1 to 4, **characterized in that** the support materials used are laden with volatile flavours, preferably of natural origin.

6. Use according to Claim 5, **characterized in that** the flavours are essential oils, citrus oils, fruit essences and flavour extracts.

7. Use according to any of Claims 1 to 6, **characterized in that** the laden support materials are added to aqueous infusion or extraction drinks and preferably teas and tisanes.

8. Use according to any of Claims 1 to 7, **characterized in that** the support materials have been introduced into flavour-containing liquids for loading with the flavours.

9. Use according to any of Claims 1 to 7, **characterized in that** the support materials are sprayed with flavour-containing liquids for loading with the flavours.

10. Use according to either Claim 8 or 9, **characterized in that** the flavour-containing liquids are process water from the flavours industry and preferably from flavour extraction, flavour work-up and/or flavour processing or are flavour concentrates.

## Revendications

1. Utilisation de matières de support solides particulaires, inertes vis-à-vis de solvants et chargées avec des arômes, pour l'aromatisation stable de boissons, **caractérisée en ce qu'**on utilise comme matières de support des composés inorganiques contenant du silicium, de l'aluminium et/ou du carbone, choisis dans le groupe des silicates, oxydes d'aluminium et charbons actifs, ayant éventuellement des teneurs en eau, qui présentent une surface spécifique comprise entre 0,1 et 1 000 m²/g et de préférence de 50 à 500 m²/g.

2. Utilisation selon la revendication 1, **caractérisée en ce qu'**on utilise comme matières de support des gels de silice, le kieselguhr, des alumines activées et/ou calcinées, γ-Al₂O₃ et/ou des xérogels d'oxyde d'aluminium.

3. Utilisation selon la revendication 1 ou 2, **caractérisée en ce qu'**on utilise des matières de support ayant une taille de pore comprise entre 0,3 et 5 000 nm.

4. Utilisation selon l'une quelconque des revendications 1 à 3, **caractérisée en ce qu'**on utilise des matières de support ayant une taille de particule ≥ 10 µm.

5. Utilisation selon l'une quelconque des revendications 1 à 4, **caractérisée en ce qu'**on utilise des matières de support chargées avec des arômes très volatils, de préférence d'origine naturelle.

6. Utilisation selon la revendication 5, **caractérisée en ce que** les arômes consistent en des huiles etherées, des essences d'agrumes, des essences de fruits et des extraits d'arômes.

7. Utilisation selon l'une quelconque des revendications 1 à 6, **caractérisée en ce qu'**on ajoute les matières de support chargées à des boissons infusées ou extraites et de préférence des infusions.

8. Utilisation selon l'une quelconque des revendications 1 à 7, **caractérisée en ce que** pour la charge avec les arômes les matières de support ont été introduites dans des liquides contenant des arômes.

9. Utilisation selon l'une quelconque des revendications 1 à 7, **caractérisée en ce que** pour la charge avec les arômes les matières de support ont reçu par pulvérisation des liquides contenant des arômes.

10. Utilisation selon la revendication 8 ou 9, **caractérisée en ce que** les liquides contenant des arômes consistent en de l'eau de processus provenant de l'industrie des arômes et de préférence de l'extraction d'arômes, du traitement d'arômes et/ou de la transformation d'arômes, ou des concentrés des arômes.
